# EUROPEAN PATENT APPLICATION

(11) **EP 3 636 971 A1**
(43) Date of publication of application: **15.04.2020**
(21) Application number: 19196631.6
(22) Date of filing: 11.09.2019
(51) Int. Cl.: F16K 7/10, F16K 7/20, F16K 31/126, F01D 17/10, F02C 6/08, F16K 1/12

(54) **A VALVE ASSEMBLY**

(30) Priority: 08.10.2018 GB 201816365
(71) Applicant: Rolls-Royce plc, London N1 9FX (GB)
(72) Inventor: Murray, Christopher, Derby, Derbyshire DE24 8BJ (GB)
(74) Representative: Rolls-Royce plc

(57) **Abstract**

A valve assembly (100) comprising: a fluid flow passage (101) to permit the flow of a fluid through the valve assembly (100); a valve seat (102); and an actuator assembly (105). The actuator assembly comprises: a valve member (106) moveable relative to the valve seat (102) between a first position in which the valve member (106) is at least partially engaged with the valve seat (102) to at least partially block the fluid flow passage (101), and a second position in which the valve member (106) is remote from the valve seat (102); an actuator body (107) in a fixed position relative to the valve seat (102); and a metal bellows (108) that is attached to the valve member (106) and to the actuator body (107) and is disposed within the fluid flow passage (101). The valve member (106) of the actuator assembly is moveable relative to the actuator body (107) and extends around the actuator body (107) such that the actuator body (107) is disposed within the valve member (106).

## Description

### Field of the disclosure

The present disclosure relates to a valve assembly, and particularly, although not exclusively, to a valve assembly for use in a gas turbine engine, for example a gas turbine aircraft engine.

### Background

Typically, some valves define a flow path or passage between moving components. In some examples the two moving components require sealing, e.g. with a moveable valve member. However the performance of such seals can be affected by operational factors including swelling of a seal in fluids, surface roughness of mating or engaging surfaces, lubrication, internal pressure, compression, elasticity, humidity, oxidation (for example at elevated temperatures), exudation (for example at elevated temperatures and/or humidity) and friction between moving components.

Some seals are provided to alleviate one or more of the abovementioned possible drawbacks, however the use of these seals can be limited by the thermal and environmental limits of the seals themselves, while some seals that have an increased ability to withstand high temperatures can increase friction between moveable components and thereby cause, or increase, leakage (e.g. from a control chamber of the valve or through the valve when the valve is supposed to be closed). These seals may therefore be susceptible to a parasitic leakage flow which can draw heat into a control system of the valve, e.g. when the sliding seal is used to seal the control chamber of the valve. Some sliding seals can also be susceptible to friction and stiction loads due to rubbing between components.

United States patent application US 2018/0216539 A1 discloses a pneumatically-actuated bypass valve for a combustor of a gas turbine. The bypass valve has a housing with an opening therein; a pneumatically actuated component within the housing; a passage coupling the opening in the housing and a duct of the combustor; a chamber formed by the housing and the pneumatically actuated component, the chamber containing a volume of air; and a control valve for controlling a pressure within the chamber to selectively displace the pneumatically actuated component to open and close the passage.

There is a need for a valve assembly with improved leak-resistance and/or effective life, especially when used at high temperature, or at least a valve assembly that provides a useful alternative to known valve assemblies.

### Summary of the disclosure

The present disclosure provides a valve assembly and a gas turbine engine as set out in the appended claims.

According to a first aspect there is provided a valve assembly comprising a fluid flow passage to permit the flow of a fluid through the valve assembly, a valve seat and an actuator assembly. The actuator assembly comprises a valve member and a metal bellows. The valve member is moveable relative to the valve seat between a first position in which the valve member is at least partially engaged with the valve seat to at least partially block the fluid flow passage, and a second position in which the valve member is remote from the valve seat. The metal bellows is attached to the valve member and is disposed within the fluid flow passage.

When the valve member is in its first position this may correspond to a closed configuration of the valve assembly (since the valve member seated on the valve seat will at least partially block the flow passage) and when in its second position this may correspond to an open configuration of the valve assembly (since the valve member remote from the valve seat provides a volume through which fluid can flow through the flow passage). The valve member may also be held in any position between a fully open and fully closed position, as will be explained below.

The metal bellows may provide the required seal through the valve assembly whilst meeting the thermal capability requirements of the valve assembly.

The valve member may comprise a piston assembly.

The actuator assembly comprises an actuator body, wherein the metal bellows is attached to the actuator body, and wherein the valve member is moveable relative to the actuator body.

The actuator body is in a fixed position relative to the valve seat. Therefore the actuator body may comprise a static housing portion of the actuator assembly and hence the valve assembly. The valve seat may comprise a static housing portion of the valve assembly. The valve member may comprise a moveable housing portion of the valve assembly.

The valve member extends around the actuator body such that the actuator body is disposed within the valve member. Therefore, in examples where the valve member comprises a piston assembly the actuator body may be a moveable surface disposed inside the piston assembly while the remainder of the piston is movable around and about this surface. In this way, the actuator body may act as a seat for the piston assembly.

The valve member may comprise a first valve member portion proximate the valve seat and a second valve member portion remote from the valve seat, and wherein the actuator body comprises a first actuator side and a second actuator side opposite the first side, wherein the first side faces the first valve member portion and the second actuator side faces the second valve member portion, and wherein the metal bellows is attached to the second actuator side of the actuator and to the second valve member portion, the metal bellows thereby being disposed between the actuator body and the second valve member portion.

The actuator body and the second valve member portion may define a control chamber for the valve assembly. Therefore, the metal bellows may delimit or define the valve control chamber. The control chamber may therefore be inside the metal bellows. A sliding seal need not be used and therefore the control chamber is less susceptible to the leakage and wear that are associated with some sliding seals. This, in turn, may increase the service life of the valve assembly. By controlling the pressure in the valve control chamber the valve member (and therefore the valve assembly) can be held in any position (including but not limited to a fully open and fully closed position) by carefully controlling the pressure of the air in the valve control chamber (e.g. via a control system) to balance the force(s) across the movable valve member. For example, the bellows allows fully variable control (e.g. positioning) of the moveable valve member with respect to the actuator housing. For example, a position feedback device could provide the position of the moveable valve member to a control system and the internal pressure (e.g. pressure in the control chamber of the valve assembly) may be increased or decreased to attain the newly desired position for the moveable valve member (which may be anywhere between fully open and fully closed). Additionally, this may also be achieved by close-looping the wider control system to, for example, downstream pressure, or temperature, or another factor.

As a sliding seal need not be used, the metal bellows may reduce parasitic leakage flow through the valve assembly, particularly when the bellows is welded to the actuator body and valve member. The valve assembly may therefore have a quicker response time due to the reduction of pressure losses through leaks in the assembly. The force margin from the valve design may also be increased relative to a similar-sized valve that uses a sliding seal, as the reduction in leaks may reduce force margin erosion since there is no 'leak-path'. The valve assembly may, accordingly, also exhibit reduced friction and stiction loads.

The metal bellows also allows the maximum of the operable temperature range of the valve assembly to be increased. The metal bellows may comprise titanium, or an alloy such as a stainless steel alloy, INCONEL™ austentic nickel-chromium-based superalloys , HASTEALLOY™ nickel-molybdenum alloys, by way of example only.

The valve member may be configured to move toward its first position when the pressure outside of the actuator assembly at the second valve member portion is greater than the pressure inside of the control chamber.

The valve member may be configured to move toward its second position when the pressure outside of the actuator assembly at the second valve member portion is less than or equal to the pressure inside of the control chamber.

Therefore, in some examples, the valve member may move in response to a differential pressure across the valve member. For example, the valve assembly and the valve member may comprise an upstream and a downstream side and a greater pressure upstream than in the control chamber may cause the valve member and hence the valve assembly to slew to a closed position. In other examples, movement of the valve member may be effectuated even though the pressure outside (e.g. at an upstream side) and inside (e.g. in the control chamber) the valve member are the same, but due to the valve member configuration this same pressure may produce a reduced force outside of the valve member on its upstream sides that will slew the valve member open.

The bellows may be moveable between an expanded configuration in which the bellows has a first dimension and a contracted configuration in which the bellows has a second dimension, the second dimension being smaller than the first dimension. When moving to its expanded configuration, the bellows may be configured to move the valve member to its second position and, when moving to its contracted configuration, the bellows may be configured to move the valve member to its first position.

The bellows may be biased toward its expanded configuration. Therefore, the valve assembly may be biased to an open configuration. The bias (e.g. spring constant) of the metal bellows may therefore be to bias the valve member, and hence the valve assembly, into its unpressurised state. This may therefore meet the closing design point pressure drop across the valve and a separate component to achieve this bias (e.g. a spring) need not be used.

As the metal bellows is connected (e.g. mechanically connected) to both the valve member and the actuator body, rotational movement is constrained and/or restricted. For example, the valve member may be rotationally constrained by virtue of its attachment to the actuator body and bellows. The metal bellows may be welded to the actuator body and valve member. Therefore, relative movement of the bellows with respect to the valve member and/or actuator body may be minimised. This may, in turn, reduce the propensity for mechanical damage to these components.

The actuator assembly may comprise a guide shaft configured to guide the movement of the valve member. The valve member may comprise the guide shaft in one example. In another example, the actuator body may comprise the guide shaft and therefore the guide shaft may be part of the static housing of the actuator assembly.

The valve assembly may further comprise a valve stop configured to limit movement of the valve assembly in a direction away from the valve seat. The valve stop could be a bayonet coupling, e.g. the valve member may be attached via a bayonet-style engagement to the guide shaft (e.g. prior to mechanical attachment of the metal bellows to the valve member and actuator body).

Alternatively, or in addition, the valve stop may comprise a portion of the valve member protruding radially inwards to form a lip or flange. For example, part of the valve member (which may be a piston cover) may extend, e.g. have dimension, in the radial direction to unbalance the piston such that if it is opened by its own upstream stage pressure, when routed through a controller, the "piston stroke" of the valve member is limited. For example, the maximum "open" distance or position of the valve member may be limited by the valve stop.

Via the valve stop, the exact piston stroke of the valve member may therefore be controlled (e.g. its maximum travel distance may be defined). This, in turn, will control and limit the maximum amount of air that is able to flow through the valve assembly when it is open.

According to another aspect there is provided a gas turbine engine for an aircraft, the gas turbine engine comprising: a turbine, a compressor, and a core shaft connecting the turbine to the compressor, a fan located upstream of the engine core, the fan comprising a plurality of fan blades, and a valve assembly as described above.

In one example, the valve assembly may be configured such that air from the compressor is configured to flow through the flow passage of the valve assembly. In another example, the valve assembly may be configured such that air from the turbine is configured to flow through the flow passage of the valve assembly.

The actuator assembly may comprise a control chamber for the valve assembly, wherein the valve assembly may be configured such that bleed air from the gas turbine engine is configured to flow to the control chamber of the valve assembly. For example, the actuator assembly may comprise a control chamber for the valve assembly, wherein the valve assembly is configured such that air from the compressor and/or the turbine is configured to flow to the control chamber of the valve assembly.

The valve assembly described above may be used in a bleed-air system or subsystem. For example, the valve assembly may be used in systems such as 2-state subsystems, flow modulating subsystems, pressure regulating sub-systems, and non-return subsystems. For example, the valve assembly may be used in conjunction with a compressor, operability bleed, starting bleed, anti-icing, pressure regulating, turbine case cooling, bleed air non-return flow systems. In one example the valve assembly is used to control the flow of air through a gas turbine engine.

The valve assembly described herein uses a metal bellows to seal the control chamber. The metal bellows may provide for enhanced performance, responsiveness and hysteresis, exhibiting less friction than traditional seals. Leakage out of the valve control chamber may also be reduced (particularly in examples where the metal bellows is welded to the valve member and to the actuator body) and service problems such as the valve failing to slew to open, or being stuck open or closed may also be reduced. Reducing leakage flow may also, in turn, reduce the amount of heat drawn through a valve assembly control system and may reduce the quantity of contamination that may be drawn into and through the valve assembly and control system. The valve assembly may also be more resistant to contamination.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a schematic, sectional side view of a valve assembly;
**Figure 4A** is a schematic, sectional side view of a valve assembly in an open configuration;
**Figure 4B** is a schematic, sectional side view of a valve assembly in a closed configuration;
**Figures 5A and 5B** are schematic views of a coupling between a valve assembly and an actuator body.

### Detailed Description

Aspects and embodiments of the present disclosure will now be discussed with reference to the accompanying figures. Further aspects and embodiments will be apparent to those skilled in the art.

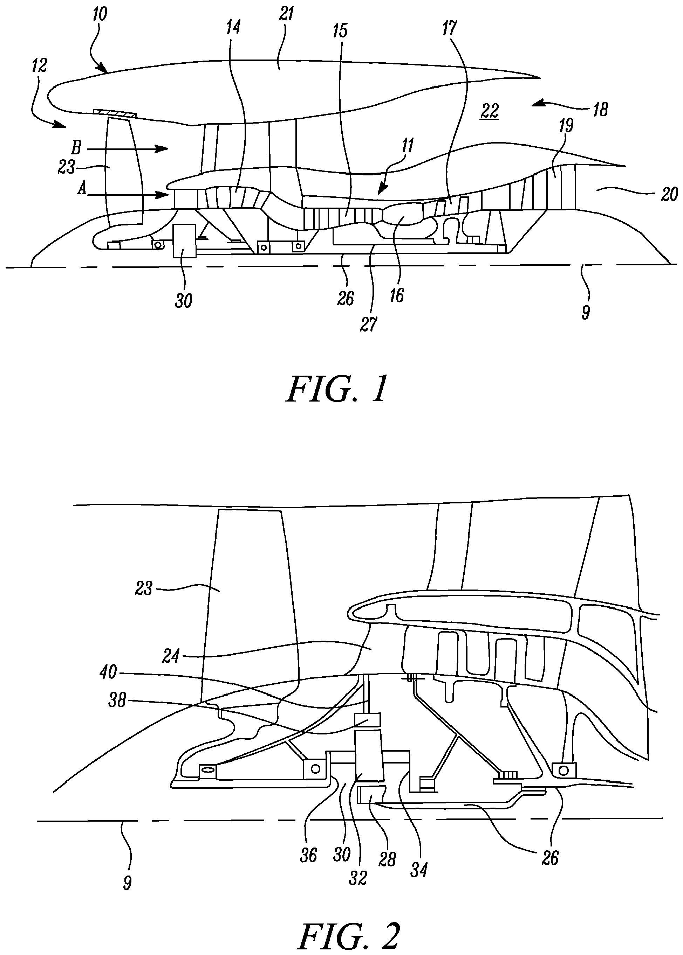

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

It will be appreciated that the arrangement shown in Figure 2 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

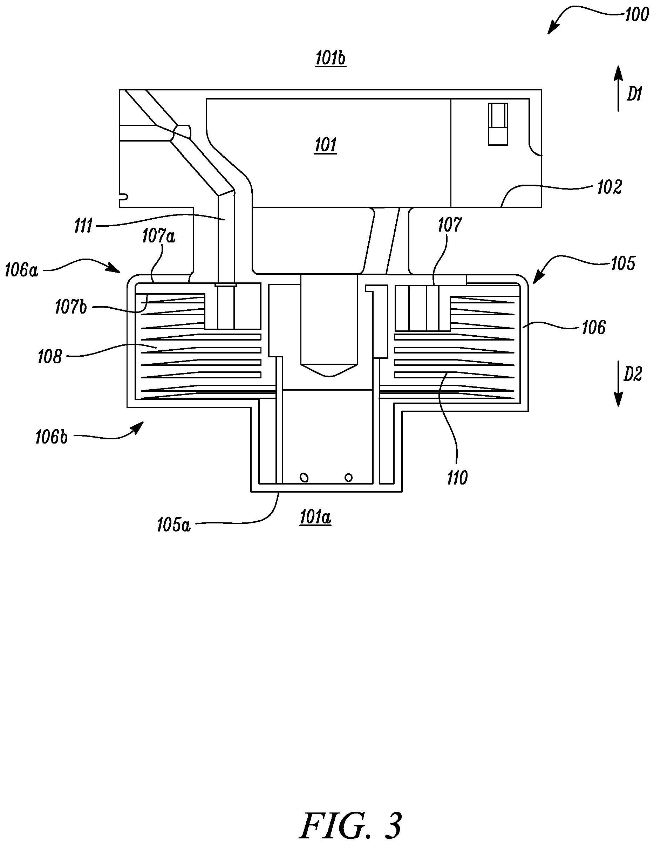

Referring now to **Figure 3** there is shown a valve assembly 100. For example, the valve assembly 100 may be for the gas turbine engine 10. The valve assembly 100 comprises a fluid flow passage 101 to permit the flow of a fluid through the valve assembly 100. For example, the fluid may comprise air, oil, hydraulic fluid, and/or fuel etc.

The valve assembly 100 has an open configuration in which fluid is permitted to flow through the valve assembly 100 via the flow passage 101 and a closed configuration in which fluid is prevented from flowing through the valve assembly 100 via the flow passage 101. The valve assembly 100 is moveable between the open and closed configuration to selectively permit and/or prevent fluid through the valve assembly 100.

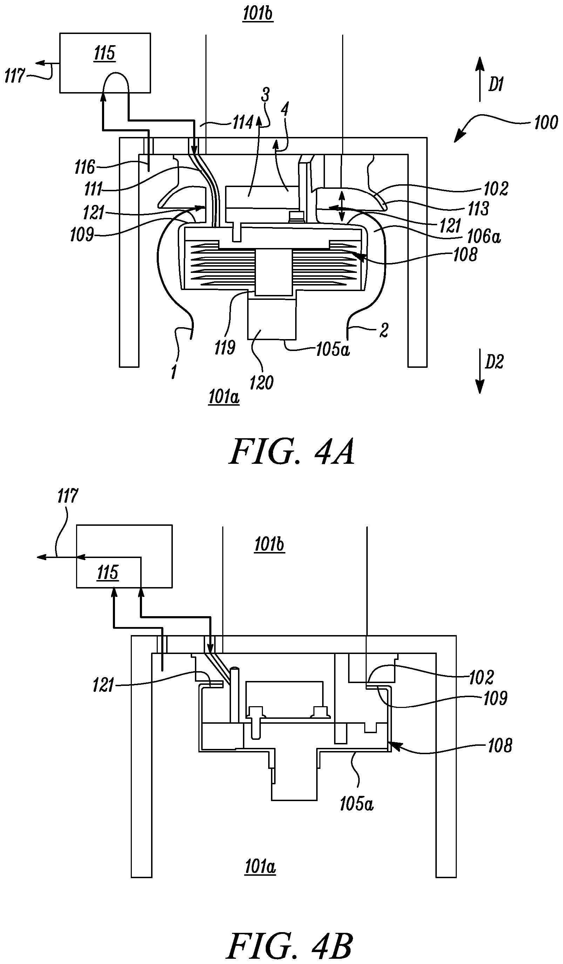

The valve assembly 100 comprises a valve seat 102 and an actuator assembly 105. The actuator assembly comprises a valve member 106 and a metal bellows 108. The valve member 106 is moveable relative to the valve seat 102 and is moveable between a first position and a second position. The second position of the valve member 106 will be described with reference to **Figure 4A** and the first position of the valve member 106 will be described with reference to **Figure 4B****.** It will therefore be appreciated that the valve member is moveable between the configurations shown in Figures 4A and 4B. In the first positon (Figure 4B), the valve member 106 is at least partially engaged with the valve seat 102 so that flow through the flow passage 101 is at least partially blocked. For example, the valve member 106 in its first position may be engaged with the valve seat 102 to block the flow passage 101.

In the second position (Figure 4A), the valve member 106 is remote from the valve seat 102 so that fluid is permitted to flow through the flow passage 101 of the valve assembly 100. When the valve member 106 is in its first position the valve assembly 100 is in a closed configuration (in which fluid flow therethrough is prevented). When the valve member 106 is not in its first position it may be remote from the valve seat 102, thereby being in its second position, and fluid flow through the flow passage may be permitted since the valve member 106 is not engaged with the valve seat 102 when the valve member 106 is in its second position. Therefore, when the valve member 106 is not in its first position (e.g. when it is in its second position), the valve assembly 100 may be in an open configuration.

The metal bellows 108 is disposed within the fluid flow passage 101 of the valve assembly 100. The metal bellows 108 is attached to the valve member 106.

The actuator assembly 105 comprises an actuator body 107. The valve member 106 is moveable relative to the actuator body 107. The actuator body 107 is in a fixed position relative to the valve seat 102. Therefore, there is no relative movement between the actuator body 107 and the valve seat 102, however the valve member 106 is able to move relative to both the valve seat 102 and the actuator body 107. It will be appreciated that the valve member 106 is moveable about the actuator body 107 to engage the valve seat 102 to block flow through the flow passage 101.

The metal bellows 108 is disposed in, e.g. within, the actuator assembly 105. The metal bellows 108 is attached to the actuator body 107. In one example, the metal bellows 108 is welded to the actuator body 107. In one example the metal bellows 108 is welded to the valve member 106. The metal bellows 108 may be welded to both the actuator body 107 and the valve member 106. The metal bellows 108 may be attached, e.g. mechanically attached, to each end of the actuator assembly 105 (one end on the actuator body 107, which is a static component of the actuator assembly 105) and the other end of the valve member (which may be a moveable piston element).

The valve member 106 is configured to extend around the actuator body 107 such that the actuator body 107 is disposed within the valve member 106.

The valve member 106 comprises a first valve member portion 106a and a second valve member portion 106b. The first valve member portion 106a is the portion of the valve member 106 that is proximate the valve seat 102. For example, the first valve member portion 106a faces, e.g. faces towards, the valve seat 102. The second valve member portion 106b is the portion of the valve member 106 that is remote from the valve seat 102. For example, the second valve member portion 106b is on an opposite side of the valve member 106 to the first valve member portion 106a. For example, the second valve member portion 106b faces away from the valve seat 102.

The actuator body 107 comprises a first actuator side 107a and a second actuator side 107b. The second actuator side 107b is opposite the first actuator side 107a, for example the second actuator side 107b is on an opposite side of the actuator body 107 to the first actuator side 107a. The first actuator side 107a faces the first valve member portion 106a and the second actuator side 107b faces the second valve member portion 106b. Therefore, the first actuator side 107a faces (e.g. faces toward) the valve seat 102 and the second actuator side 107a faces away from the valve seat 102. In the example of Figure 3, all of the first and second valve member portions 106a,b and the first and second actuator sides 107a,b face away from (a centre of) the actuator assembly 105.

The metal bellows 108 is attached to the valve member 106 at the second valve member portion 106b and attached to the actuator body 107 at the second actuator side 107b. That is, the metal bellows is attached to the second valve member portion 106b and the second actuator side 107b. Therefore, the metal bellows 108 is disposed between the actuator body 107 and the second valve member portion 106b.

The valve assembly 100 comprises a control chamber 110. For example, the actuator assembly 105 comprises a control chamber 110. The control chamber 110, in this example, is defined by the actuator body 107 and the second valve member portion 106b. In this example, the control chamber is also defined the metal bellows 108. Therefore, the metal bellows may provide a leakage free dynamic seal for the control chamber, e.g. when the metal bellows 108 is welded to the actuator body 107 and valve member 106. The metal bellows 108 may also provide a valve control chamber of variable volume.

The flow passage 101 has an upstream portion 101a and a downstream portion 101b. It will therefore be appreciated that, when the valve assembly 100 is open, fluid is permitted to flow through the flow passage 101 from the upstream portion 101a to the downstream portion 101b. The valve member 106 is disposed within the flow passage 101 and is moveable in a first direction D1 and a second direction D2. Movement of the valve member 106 in the first direction D1 is toward the first position of the valve member 106, in which the valve member 106 is engaged with the valve seat 102, and in which the valve assembly 100 is closed. Movement of the valve member 106 in the second direction D2 is toward the second position of the valve member 106, in which the valve member 106 is remote from the valve seat 102, and in which the valve assembly 100 is open. Therefore, the first direction D1 is toward the downstream portion 101b of the flow passage 101 and of the valve assembly 100 and is therefore a downstream direction, and the second direction D2 is toward the upstream portion 101a of the flow passage 101 and of the valve assembly 100 and is therefore an upstream direction.

The metal bellows 108 is moveable between an expanded configuration and a contracted configuration. In its expanded configuration the metal bellows 108 has a first dimension and in its contracted configuration the metal bellows 108 has a second dimension, the second dimension is smaller than the first dimension so that the dimension of the bellows increases as the metal bellows moves from its contracted to its expanded configuration. Conversely, the dimension of the bellows decreases as the bellows moves from its expanded to its contracted configuration. The dimension of the bellows may be its height, length, depth, etc., but the bellows may have constant width.

As the metal bellows 108 is attached to the valve member 106 (e.g. attached to the second valve member portion 106b) movement of the metal bellows 108 causes the valve member to 106 to move, e.g. relative to the actuator body 107. As the actuator body 107 is in its fixed position, expansion of the bellows causes the valve member 106 to move in the second direction D2 (e.g., the upstream direction) and contraction of the bellows causes the valve member 106 to move in the first direction D1 (e.g. the downstream direction) and therefore toward the vale seat 102. Therefore, in this example, the metal bellows 108 is configured to move the valve member 106 to its second position when the metal bellows 108 is moving to its expanded configuration and the metal bellows 108 is configured to move the valve member 106 to its first position when the metal bellows 108 is moving to its contracted configuration.

The metal bellows 108 may be biased towards its expanded configuration. Therefore, the metal bellows 108 may be biased in the direction D2, e.g. biased upstream. The valve assembly 100 may therefore be biased to an open configuration.

As will be described below, a force applied to the actuator assembly 105 in the first direction D1 may overcome the natural bias of the metal bellows 108 and cause it to move to its contracted configuration, thereby causing the valve member 106 to move in the first direction D1, towards its first position, and therefore towards the valve seat 102. Enough force may thereby cause the valve member 106 to be fully engaged with the valve seat 102 to thereby block flow through the flow passage 101, thereby closing the valve assembly 100. Alternatively, a force in the control chamber 110 may cause the bellows to move to its expanded configuration and thereby cause the valve member 106 to move in the direction D2 to its second position. Therefore, if the valve member 106 is initially seated on the valve seat 102 to block the flow passage 101, enough force in the control chamber 110 action on the valve member 106 and actuator body 107 may cause the valve member 106 to become unseated, thereby opening the flow passage 101, and thereby opening the valve assembly 100.

The actuator assembly 105 comprises an upstream portion, or side, 105a. Therefore, in one example pressure on the upstream portion 101a of the flow passage 101, and therefore on the upstream side 105a of the actuator assembly may, in some examples, supply enough force to overcome the natural bias of the metal bellows 108 and cause the valve member 106 to move to its first, or seated, position closing the valve assembly 100. It will therefore be appreciated that a pressure differential across the valve member 106 may cause the valve member 106 to move, and the metal bellows 108 to expand and/or contract. In some examples, a greater pressure applied to the upstream side 105a of the actuator assembly 105 than the pressure in the control chamber 110 may cause the bellows to contract, thereby moving the valve member 106 toward its first portion engaging the valve seat 102. In another example, the same pressure on the upstream side 105a of the actuator assembly 105 and in the control chamber 110 may cause the bellows to expand, thereby moving the valve member 106 toward its second position, the open position, since the same pressure may cause a net force imbalance to move the valve member in the opening direction.

The valve assembly 100 comprises a control chamber flow passage 111 to permit the flow of fluid into the valve control chamber 110. It will be appreciated that as control fluid is supplied into the valve control chamber 110 this internal pressure may act with the internal bias of the metal bellows (e.g. when the metal bellows is biased to an expanded position to thereby bias the valve assembly 100 open) to provide an additional opening force to the valve member 106 and therefore the valve assembly 100. This may overcome any closing force provided on the upstream side 105a of the valve assembly 100, which force imbalance causes the valve member 106 to move away from the valve seat 102 (in the direction D2) and hence to open the valve assembly 100. When the valve control chamber 110 is vented, the resulting force imbalance may cause the valve member 106 to slew in the direction D1 to become seated (e.g. engaged with the valve seat 102) to thereby slew the valve assembly 100 to its closed configuration. Therefore, careful control of the pressure supplied to the control chamber 110 inside of the metal bellows 108 may allow the valve member 106 to be controlled to any given position between a fully open and a fully closed position.

The use of a metal bellows 108 provides a seal for the control chamber 110. Therefore, no sliding seal is needed and leakage flow of pressurised air out of the control chamber 110 can be minimised and/or prevented.

Referring now to Figure 4A there is shown the valve assembly 100 in an open configuration. In the open configuration shown in Figure 4A the valve member 106 has moved to its second position thereby unblocking, or not blocking, the flow path 101. Flow of fluid is thereby permitted through the valve assembly as indicated by the arrows 1-4.

The actuator assembly 105 is therefore disposed within the flow passage 100 such that, when the valve assembly is open, fluid is configured to flow from an upstream portion 101a of the flow passage to a downstream portion 101b of the flow passage around the actuator assembly 105 (and therefore around the valve member 106 and around the metal bellows 108).

In this example, the actuator assembly 105 comprises a valve sealing surface 109, e.g. the valve member 106 comprises a sealing surface 109. The sealing surface 109 in this example is the part of the valve member 106 that engages the valve seat 102 to prevent fluid flowing past the actuator assembly 105 and to the downstream side of the flow passage 100 when the valve assembly 100 is closed. The distance between the sealing surface 109 and the valve seat 102 defines a moveable air area 113 (which can be considered to be a movable 'air curtain' or 'curtain area) through which fluid may flow from the upstream portion 101a to the downstream portion 101b of the flow passage 101 when the valve assembly 100 is open. The curtain area113 is shown in Figure 4A as this figure depicts a schematic cross section.

As shown in Figure 4A, the force acting on the actuator assembly 105 on the upstream side 105a is not enough to overcome the force acting on the assembly 105 within the control chamber 110 and so the bellows is in its expanded configuration, and the valve member 106, and therefore the sealing surface 109, is remote from the valve seat 102. For example, the control chamber 110 may be pressurised at a lower pressure than the upstream side 105a, or may not be pressurised at all but the force or pressure on the upstream side 105a is not enough to overcome the natural bias of the metal bellows 108. Accordingly, Figure 4A shows the valve assembly open.

As shown in Figure 4A, the control chamber flow passage 111 defines a fluid path indicated by arrow 114 into the control chamber 110. A controller, schematically indicated by 115, may be provided and configured to supply the control chamber 110 with a source of pressure, e.g. pressurised fluid. Controller 115 may be configured to route pressure from an upstream side of the valve assembly 100, as indicated by arrow 116. Therefore, in some examples, the same fluid, or fluid at the same pressure, may be supplied to both the control chamber 110 of the valve and the upstream actuator side 105a. In other words, the fluid in the flow path may (through flow paths indicated by arrow 116 and arrow 114) be supplied to the control chamber 110. As indicated by arrow 117 the controller 115 may be configured to vent fluid in the control chamber 110 of the valve assembly 100.

In this example, the valve assembly 100 comprises a guide shaft 119 and a concentric surface 120, the concentric surface 120 being concentric to the guide shaft 119. As shown in Figure 4A, the actuator assembly 105 comprises the guide shaft 119 and the concentric surface 120. More specifically, the actuator assembly 105 comprises the guide shaft 119 and the valve member 106 comprises the concentric surface 120. Therefore, in this example, the valve member 106 is disposed about a guide shaft. It will be appreciated that the guide shaft 119 guides movement of the valve member 106. In other words, translational movement of the valve member 106 (i.e. between its first and second positions, in the first and/or second directions D1, D2) is at least in part defined by the guide shaft 119, which is configured to prevent lateral movement (i.e. in a direction perpendicular to the first and/or second directions D1, D2) of the valve member 106.

Figure 4B shows the valve assembly 100 in a closed configuration. Accordingly, no fluid is permitted to flow past the actuator assembly (and therefore valve member and bellows), as the valve sealing surface 109 and therefore the valve member 106 has engaged the valve seat 102. The metal bellows 108 is shown in Figure 4B as fully compressed, i.e. at a minimal dimension (e.g. depth). The configuration of Figure 4B may be attained by venting (e.g. via a passage indicated by arrow 117 and under control of the controller 115) the control chamber 110 of the valve so that the internal force, the force internal to the actuator assembly 105, is not sufficient to overcome the force on the upstream side 105a of the actuator assembly 150 and therefore the valve member 106 moves to its first position, compressing the bellows, seating the valve sealing surface 109 against the valve seat 102.

It will readily be appreciated from Figures 4A and 4B that the valve assembly 100 comprises a moveable component and a static component. In these examples, the moveable component comprises the valve member 106 and the static component comprises the valve seat 102 and the actuator body 107. In certain examples, the actuator assembly 105 comprises a piston. For example, the valve member 106 and surface 120 may be part of a moveable piston. The control chamber 110 may be a chamber of the piston.

It will also be appreciated that the valve assembly 100 provides a dynamic seal (e.g. when sealing surface 109 engages the valve seat 102) between two moving components. Accordingly, the valve sealing surface 109 and/or the valve member 106 may be considered to be a dynamic seal for the valve assembly 100. The valve sealing surface 109 and/or the valve member 106 can therefore permit relative movement between surfaces that require sealing. When the sealing surface 109 is engaged with the valve seat 102 to block flow through the fluid flow path 101, a seal is therefore obtained in the valve assembly 100.

The valve member may comprise a piston element or piston assembly, as schematically depicted in Figures 3, 4a and 4b. The axial expansion and contraction (or compaction) of the bellows which is attached to the valve member, permits the valve member to translate (e.g. in the directions D1 and D2) as a function of differential pressures to achieve any position between the valve assembly 100 being fully open and fully closed. The translation of the valve member (or piston assembly) therefore controls the flow metering, pressure regulating, or non-return function of the valve assembly 100, and therefore may control the flow metering, pressure regulating, or non-return function of a gas turbine engine when the valve assembly 100 is utilised in conjunction with a gas turbine engine.

As the metal bellows 108 is biased to an expanded (e.g. fully expanded) configuration (thereby biasing the valve assembly 100 open), no separate opening feature (e.g. a spring) is needed to open the valve assembly 100. Additionally, in examples where the metal bellows 108 is mechanically connected to the actuator body 107, a static component of the valve assembly, and the valve member 106, a moveable component, the valve member 106 is mechanically restrained from rotation

It will be appreciated that the metal bellows 108 may provide at least one of the following functions: to act as a "spring constant" for the valve assembly, to define the default state of the valve (in the examples above, to ensure that the valve is open when under no differential pressure), seal the control chamber, and rotationally constrain the actuator body and valve member from moving.

The valve assembly 100 may comprise a valve stop to limit movement of the valve assembly in a direction away from the valve seat 102 (in the direction D2). For example, as shown in Figures 4A and 4B, the valve member 106 comprises a lip, or a flange, 121, in this example, the lip is a radial lip 121 that moves with the valve member 106 relative to the actuator body 107. The sealing surface 109 may comprise the lip 121.

As can be seen in Figure 4A, the valve member 106 has moved in the direction D2 such that the lip 121 is engaged with the actuator body 107 which prevents further movement of the valve member 106 in the direction D2. Therefore, in this example, the second position of the valve member 106 may be defined as the position at which the lip 121 engages the actuator body 107 to prevent further movement of the valve member 106 in the direction D2. In one example the actuator assembly 105 comprises a piston, and the valve member is part of a piston cover. In this example, the lip 121 may be a part of the piston cover that bends back in radially, i.e. towards a piston central axis.

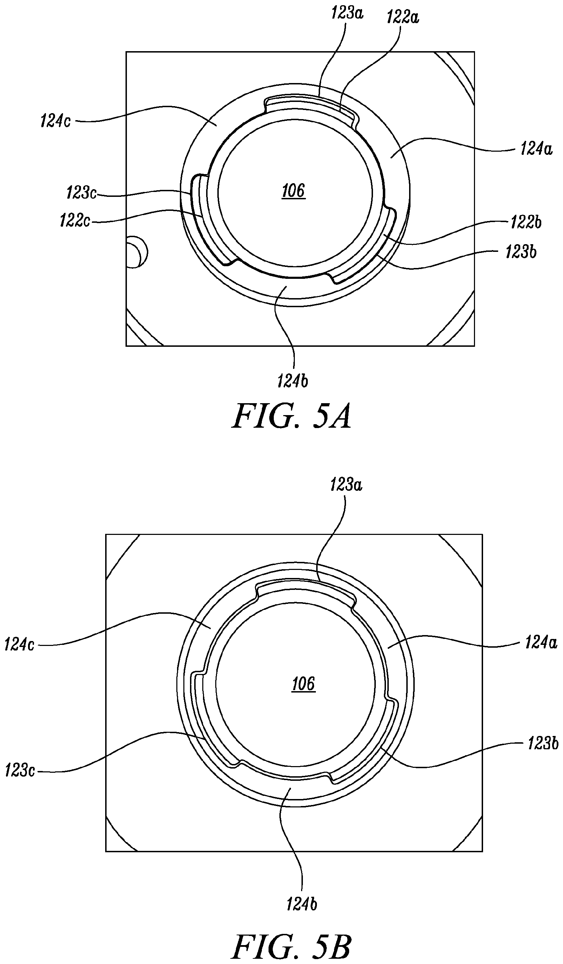

An alternate, or additional, feature to the lip 121 is depicted in Figures 5A and 5B which is a bayonet-style coupling. Figures 5A and 5B illustrate such a coupling.

In the example depicted in Figures 5A and 5B the valve member 106 comprises three outwardly protruding dogs or lugs 122a-c and the actuator body 107 comprises three correspondingly sized and shaped recesses 123a-c. The actuator body 107 also comprises three flanges 124a-c, each flange being disposed in between two of the three recesses 123a-c (for example flange 124a is disposed between recesses 123a and 123b, etc.).

To assembly the valve apparatus 100, or to couple the valve member 106 to the actuator body 107, the valve member 106 is inserted into the actuator body, e.g. in the axial direction 150, such that the lugs 122a-c are each disposed within a respective recess 123a-c of the actuator body 107. This is shown in **Figure 5A****.** Withdrawal of the valve member 106 from the actuator body 107 is therefore possible in this configuration as the lugs 122a-c are free to pass through the recesses 123a-c.

The valve member 106 may be rotated clockwise or anti-clockwise to the configuration shown in **Figure 5B****,** in which the lugs 122a-c are each axially aligned with one of the actuator flanges 124a-c. The valve member 106 and the actuator body 107 are configured such that when the lugs 122a-c are engaged with the flanges 124a-c, further movement of the valve member 106 in the direction D2 is prevented. Therefore, in this example, the second position of the valve member 106 may be defined as the position at which the lugs 122a-c engage the flanges 124a-c to prevent further movement of the valve member 106 in the direction D2.

In the depicted example the lugs are provided on the valve member and the recesses/flanges are provide on the actuator body. In another example the lugs may be provided on the actuator body and the recesses/flanges may be provided on the valve member. Although three flanges/recesses/lugs are depicted it will be understood that this is exemplary only and in other examples any number could be used.

In some examples the valve member comprises a piston, in which case the lugs could be provided on the piston body. In another example, the recesses may be provided on the piston body.

In examples where the bayonet fitting is used, the metal bellows may restrain the actuator body and valve member from relative rotation. This may ensure a secure fitting since rotation (which could lead to the lugs being rotated to be in line with the recesses) is avoided. Therefore, in one example, when assembling the valve assembly the valve member and actuator body may be engaged via the bayonet-style engagement prior to the metal bellows being attached (e.g. welded) to each of the valve member and actuator body.

The valve stops (e.g. the lugs/flanges of Figures 5A or 5B or the radial lip 121 of Figures 4A and 4B) may limit and/or define the fully open position of the valve assembly 100, and may limit the maximum volume of fluid through the valve assembly 100. The stops therefore may define the exact valve member stroke, e.g. travel distance, and therefore the curtain area of the valve assembly. For example, these may be controlled by varying the placement of the valve stops to meet specific design requirements or constraints in a controllable and repeatable way.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A valve assembly (100) comprising:
a fluid flow passage (101) to permit the flow of a fluid through the valve assembly (100);
a valve seat (102); and
an actuator assembly (105) comprising:
a valve member (106) moveable relative to the valve seat (102) between a first position in which the valve member (106) is at least partially engaged with the valve seat (102) to at least partially block the fluid flow passage (101), and a second position in which the valve member (106) is remote from the valve seat (102);
an actuator body (107) in a fixed position relative to the valve seat (102); and
a metal bellows (108) that is attached to the valve member (106) and to the actuator body (107) and is disposed within the fluid flow passage (101);
wherein the valve member (106) of the actuator assembly is moveable relative to the actuator body (107) and extends around the actuator body (107) such that the actuator body (107) is disposed within the valve member (106).

2. The valve assembly (100) of claim 1, wherein the valve member (106) comprises a first valve member portion (106a) proximate the valve seat (102) and a second valve member portion(106b) remote from the valve seat (102), and wherein the actuator body (107) comprises a first actuator side (107a) and a second actuator side (107b) opposite the first side, wherein the first side faces the first valve member portion(106a) and the second actuator side (107b) faces the second valve member portion(106b), and wherein the metal bellows (108) is attached to the second actuator side (107b) of the actuator and to the second valve member portion (106b), the metal bellows (108) thereby being disposed between the actuator body (107) and the second valve member portion(106b).

3. The valve assembly (100) of claim 2, wherein the actuator body (107) and the second valve member portion (106b) define a control chamber (110) for the valve assembly (100).

4. The valve assembly (100) of claim 3, wherein the valve member (106) is configured to move toward its first position when the pressure outside of the actuator assembly (105) at the second valve member portion (106b) is greater than the pressure inside of the control chamber (110).

5. The valve assembly (100) of claim 3 or 4, wherein the valve member (106) is configured to move toward its second position when the pressure outside of the actuator assembly (105) at the second valve member portion (106b) is less than or equal to the pressure inside of the control chamber (110).

6. The valve assembly (100) of any one of claims 3 to 5, wherein the bellows (108) is moveable between an expanded configuration in which the bellows (108) has a first dimension and a contracted configuration in which the bellows (108) has a second dimension, the second dimension being smaller than the first dimension, and wherein, when moving to its expanded configuration, the bellows (108) is configured to move the valve member (106) to its second position and, when moving to its contracted configuration, the bellows (108) is configured to move the valve member (106) to its first position.

7. The valve assembly (100) of claim 6, wherein the bellows (108) is biased toward its expanded configuration.

8. The valve assembly (100) of any one of claims 2 to 7, wherein the actuator assembly (105) comprises a guide shaft (119) configured to guide the movement of the valve member (106).

9. The valve assembly (100) of any one of claims 1 to 8, further comprising a valve stop configured to limit movement of the valve assembly (100) in a direction away from the valve seat (102).

10. A gas turbine engine (10) for an aircraft, the gas turbine engine comprising:
an engine core (11) comprising a turbine (19), a compressor (14), and a core shaft (26) connecting the turbine (19) to the compressor (14);
a fan (23) located upstream of the engine core (11), the fan (23) comprising a plurality of fan blades; and
a valve assembly (100) of any preceding claim.

11. The gas turbine engine (10) of claim 10, wherein the valve assembly (100) is configured such that air from the compressor is configured to flow through the flow passage (101) of the valve assembly (100).

12. The gas turbine engine (10) of claim 10, wherein the actuator assembly (105) comprises a control chamber (110) for the valve assembly (100), wherein the valve assembly (100) is configured such that air from the compressor is configured to flow to the control chamber (110) of the valve assembly (100).
